# DEMANDE DE BREVET EUROPEEN

(11) **EP 1 176 402 A1**
(43) Date de publication de la demande: **30.01.2002**
(21) Numéro de dépôt: 00202686.2
(22) Date de dépôt: 28.07.2000
(51) Int. Cl.: G01F 13/00, A47J 31/42, G01F 11/46

(54) **Dispositif de dosage et distributeur comprenant un tel dispositif**

(71) Demandeur: SOCIETE DES PRODUITS NESTLE S.A., 1800 Vevey (CH)
(72) Inventeur: Bardin, Ennio, 1350 Orbe (CH)
(74) Mandataire: Borne, Patrice Daniel

(57) **Abrégé**

L'invention se rapporte à un dispositif de dosage en produit alimentaire à base de poudre comprenant une trémie (22) pour le stockage de la poudre, un moyen de dosage (23) localisé dans la trémie (22) afin de transporter la poudre de la trémie vers une zone d'alimentation (25) comprenant une portion de base (26) munie d'une ouverture (27) permettant la chute d'une quantité dosée de poudre caractérisé en ce qu'un l'élément d'obturation (28) est arrangé avec la portion de base (26) afin de permettre l'obturation de l'ouverture de la portion de base et en ce qu' il présente des moyens de commande de l'élément d'obturation capable de commander l'obturation de l'élément d'obturation (28) à partir de l'arrêt du moyen de dosage (23).

## Description

L'invention se rapporte au domaine des appareils de distribution automatique de boissons sur demande. Plus particulièrement, l'invention se rapporte aux dispositifs destinés à équiper les services de restauration des moyens de transports tels que les avions, les trains ou autres.

Il n'existe pas de distributeur de boissons utilisant des poudres solubles pour la préparation de boissons telles que celles à base de café ou autres en service dans les avions de ligne. En général, les systèmes de préparation de café pour de telles applications utilisent tous le principe d'extraction à partir de café moulu rôti. Le temps nécessaire à l'extraction rend le principe peu pratique et aussi peu flexible pour la préparation de combinaisons ou mélanges tels que café au lait, cappuccino ou autres. Une préparation manuelle étant nécessaire, de tels systèmes ne peuvent pas être installés de manière satisfaisante en libre service à l'attention des passagers.

Par ailleurs, il existe des distributeurs de boissons utilisant des produits à base de poudre dans les lieux publics. Ces distributeurs sont en général des dispositifs d'assez grande capacité. De tels dispositifs comprennent des containers pour le stockage de poudre, des trémies en aval des containers munies de moyens de dosage et des bols de mélange en aval des trémies pour récupérer la poudre et faire le mélange avec une quantité d'eau puis effectuer la distribution par gravité au travers de tubes de distribution.

Dans les distributeurs de boissons connus, la poudre est expulsée du dispositif de dosage dans le bol de mélange au moyen d'une vis doseuse au travers d'une zone d'ouverture de la trémie. La quantité dosée est fonction du nombre de tours opéré par la vis doseuse. Entre autre, lorsque ce principe est appliqué à des distributeurs de petites dimensions, on constate des problèmes de régularité de la quantité de poudre dosée ainsi que des problèmes d'encrassement du bol de mélange et des canalisations. Ces problèmes sont, semble-t-il, dus au fait qu'il reste toujours un peu de poudre au bord de la zone d'ouverture après l'arrêt du moyen de dosage. Une partie au moins de cette poudre a tendance à chuter dans le bol en dehors des cycles de préparation; ce qui encrasse le bol en formant des morceaux ou grumeaux faiblement solubles. Une autre partie de la poudre a tendance à s'agglomérer au niveau de l'ouverture du dispositif de dosage en formant des barbes qui sont rendues humides et collantes par la vapeur d'eau provenant du bol de mélange. Ces problèmes sont exacerbés lors de l'utilisation de poudres très hygroscopiques comme la poudre de lait. Un nettoyage régulier du dispositif est ainsi rendu obligatoire afin d'éviter tout risque de contamination.

Un autre problème constaté vient de la production de vapeur dans la partie aval du distributeur, notamment dans le bol de mélange où l'eau est mélangée avec la quantité de poudre dosée. Cette vapeur a tendance à remonter dans le dispositif de dosage et à humidifer la poudre se trouvant dans la trémie et dans la partie de stockage. Il en résulte une dégradation de la qualité et de la fluidité de la poudre.

La présente invention vise donc à résoudre ces problèmes en proposant un dispositif de dosage pouvant être utilisé dans un dispositif de distribution de boisson; en particulier, même si non-exclusivement, pour une application à un distributeur de faible encombrement destiné à équiper, en libre-service, des avions de ligne ou autres moyens de transport.

Pour cela, la présente invention concerne un dispositif de dosage en produit alimentaire à base de poudre comprenant une trémie pour le stockage de la poudre, un moyen de dosage localisé dans la trémie afin de transporter la poudre de la trémie vers une zone d'alimentation comprenant une portion de base munie d'une ouverture permettant la chute d'une quantité dosée de poudre; caractérisé en ce qu'un élément d'obturation est arrangé avec la portion de base afin de permettre l'obturation de l'ouverture de la portion de base et en ce que le dispositif comprend des moyens de commande capable de commander l'obturation de l'élément d'obturation à partir de l'arrêt du moyen de dosage.

Ainsi donc, un tel dispositif permet de résoudre les problèmes liés à la chute de poudre en dehors du cycle de préparation de la boisson dans le bol de mélange et permet d' éviter ainsi les problèmes dus à l'encrassement du/des bol(s) de mélange et du/des tube(s) de distribution.

Préférablement, la portion de base forme une portion de tube munie d'une ouverture permettant la chute d'une quantité dosée de poudre et l'élément d'obturation est disposé en relation coaxiale avec la portion de base afin de permettre l'obturation de l'ouverture par rotation de l'élément d'obturation autour de la portion de base. Un tel agencement a pour avantage d'éliminer, par effet de raclage de l'élément d'obturation, les bavures et barbes de poudre pouvant s'agglomérer sur les bords de l'ouverture. L'ouverture reste donc parfaitement propre après chaque cycle de dosage.

Selon un aspect préféré, l'élément d'obturation a lui aussi la forme d'une portion de tube possédant une lumière; l'élément d'obturation étant déplaçable par glissement en rotation autour de la portion de base entre une position d'ouverture dans laquelle la lumière de l'élément d'obturation est en partie au moins coïncidante avec l'ouverture et une position de fermeture dans laquelle la lumière de l'élément d'obturation est déplacée totalement en dehors du champ de l'ouverture. De cette manière, l'agglomération de poudre sur les bords de l'ouverture est évitée. De plus, l'élément d'obturation qui obture ainsi entièrement l'ouverture joue le rôle de pare-vapeur en évitant à la poudre se trouvant dans la trémie d'absorber l'humidité venant du bol.

Les moyens de commande de l'élément d'obturation comportent au moins un organe d'entraînement tel qu'un moteur électrique. Compte tenu du fait que l'invention vise plus particulièrement un dispositif destiné à s'insérer dans un espace restreint, il est avantageux de prévoir que le mouvement de l'élément d'obturation est commandé par un organe d'entraînement situé à l'arrière de la trémie au moyen d'un système de transmission comprenant des moyens de transmission dont au moins une tige de transmission et au moins un moyen d'engrenage en relation avec ladite tige et l'élément d'obturation. Parmi les avantages de prévoir l'organe de commande à l'arrière, il y a la possibilité de rendre au moins une partie du dispositif de dosage facilement amovible et enfichable à l'organe de commande, tout en gardant en permanence celui-ci en relation avec le circuit électrique de la machine.

Le dispositif selon l'invention comprend, par ailleurs, un système de contrôle qui commande le cycle de dosage dans l'ordre suivant:
activation des moyens de commande de l'élément d'obturation à partir d'une position de fermeture de l'élément d'obturation vers une position d'ouverture et désactivation desdits moyens en position d'ouverture de l'élément d'obturation,
activation du moyen de dosage pour le début du dosage en poudre,
désactivation du moyen de dosage pour la fin du dosage en poudre,
ré-activation des moyens de commande de l'élément d'obturation à partir de la position d'ouverture de l'élément d'obturation vers une position de fermeture et désactivation desdits moyens en position de fermeture de l'élément d'obturation.

L'invention se rapporte aussi à un dispositif de distribution permettant la préparation de boissons selon un choix de combinaisons parmi au moins deux sources de poudre et ayant pour particularité de pouvoir s'insérer dans un espace d'encombrement réduit tel que dans l'armoire d'un compartiment de restauration d'avion de ligne ou similaire.

Pour cela, le dispositif de boissons selon l'invention comprend:
au moins deux trémies pour le stockage de deux types de poudre pouvant être sélectionnées, soit individuellement, soit en mélange, pour la préparation d'une boisson; les trémies étant positionnées de manière à présenter un côté adjacent; chaque trémie comprenant un moyen de dosage permettant le transport de la poudre vers une zone d'alimentation;
un récipient de mélange commun positionné de telle façon à pouvoir réceptionner la dose de poudre provenant de chacune des trémies;
caractérisé en ce que les deux trémies ont une forme asymétrique; le moyen de dosage étant positionné du côté adjacent des deux trémies par rapport au plan longitudinal médian de chaque trémie, de façon à former une configuration rapprochée des zones d'alimentation l'une de l'autre de façon à diminuer l'encombrement du récipient de mélange.

Une telle configuration a pour avantage de pouvoir disposer d'un appareil compact mais néanmoins capable de préparer un nombre important de boissons selon un choix multiple comme par exemple, la préparation de boissons chaudes à base de café et/ou de lait solubles.

Selon un autre aspect avantageux de l'invention, le dispositif de distribution de boisson sur demande comprend au moins une trémie, un logement localisé au dessus de la trémie caractérisé en ce que la trémie comprend des moyens de guidage adaptés à recevoir un élément de recharge en poudre le logement ainsi que les moyens de guidage étant arrangés de façon à permettre l'engagement dudit élément de recharge selon une direction sensiblement horizontale. De préférence, l'élément de recharge a la forme d'une barquette ayant son ouverture en direction de la trémie lors de son engagement.

Un tel dispositif d'alimentation a pour avantage de faciliter l'alimentation en poudre. L'alimentation peut donc se faire par l'avant de la machine simplement par ouverture du panneau avant du dispositif. Un tel système présente un avantage par rapport à un système d'alimentation par remplissage d'un container qui nécessite le soulevant du panneau supérieur de la machine ou tout au moins le retrait du container pour effectuer le remplissage. On réduit ainsi les risques de faire tomber de la poudre en dehors du container de stockage.

Selon les caractéristiques précitées, la machine peut être réalisée de manière compacte, ainsi donc être facilement encastrable dans un espace de restauration tout en autorisant un rechargement en poudre du dispositif qui soit rapide et sans difficulté particulière.

Le dispositif utilise de préférence des éléments de recharge tels que ceux décrits dans la demande de brevet européenne numéro 1028068 déposée le 12.02.1999 dont le contenu est intégralement incorporé par référence à la présente demande.

La suite de la description est faite en référence aux dessins, selon lesquels:
Fig. 1 est une représentation schématique en perspective d'un dispositif de distribution de boissons selon l'invention;
Fig. 2 représente en perspective une partie du dispositif de la fig. 1;
Fig. 3 montre une vue en coupe selon A-A de la fig. 1;
Fig. 4 montre une vue en coupe selon B-B de la fig. 3;
Fig. 5 montre une vue en coupe selon C-C de la fig. 3;
Fig. 6 montre une vue en coupe selon D-D de la fig. 3;
Fig. 7 montre un dispositif de dosage selon l'invention;
Fig. 8 à 10 montrent le principe d'ouverture/fermeture du dispositif de dosage selon l'invention.

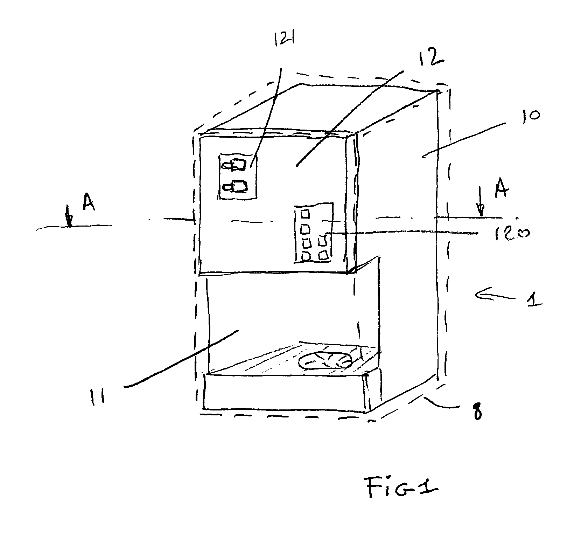

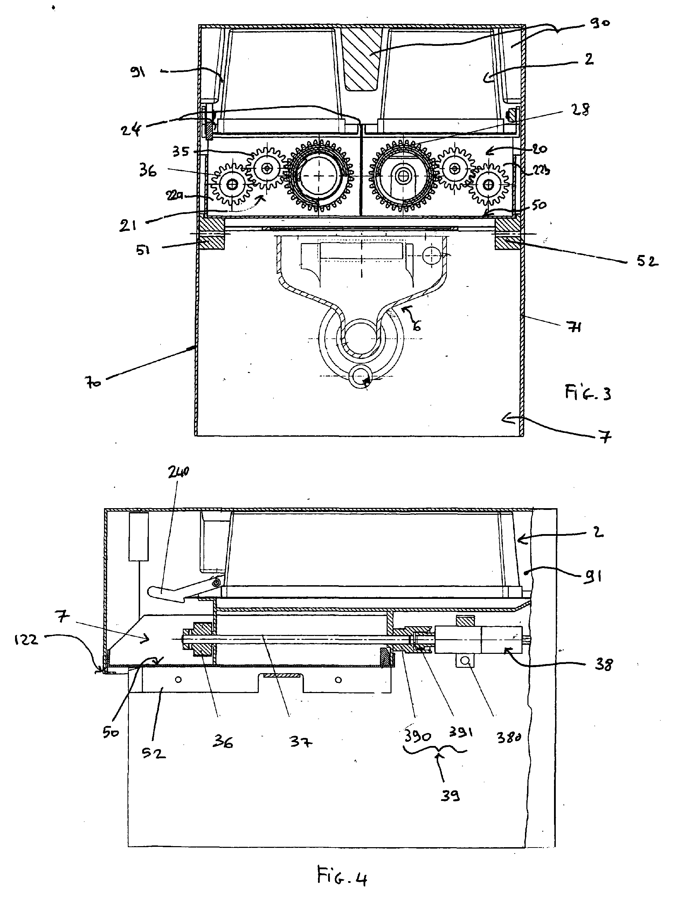

Le dispositif de distribution 1 représenté à la fig. 1, à titre d'illustration préféré, est une machine de distribution de boissons chaudes du type à café pouvant être installée dans un espace restreint, notamment pouvant être encastrée dans un espace 8 aux dimensions standards, comme dans celui d'une armoire de restauration d'un avion de ligne, par exemple, dans une zone de libre-service. Le dispositif comprend un cabinet 10 formant les parois du dispositif qui délimitent une chambre interne 7, une zone ouverte de distribution 11 pour permettre l'engagement d'un récipient telle qu'une tasse, un panneau avant 12 muni de touches de présélection 120 et d'un système de fermeture 121 sécurisé selon les normes en vigueur de l'aviation civile. Le panneau possède la caractéristique de pouvoir s'ouvrir sur l'avant, de préférence selon un axe de rotation situé sur l'un des bords du panneau. Dans le cas présent, le panneau s'ouvre en tirant du haut vers le bas selon un axe de rotation 122 situé à la base inférieure du panneau (fig. 4).

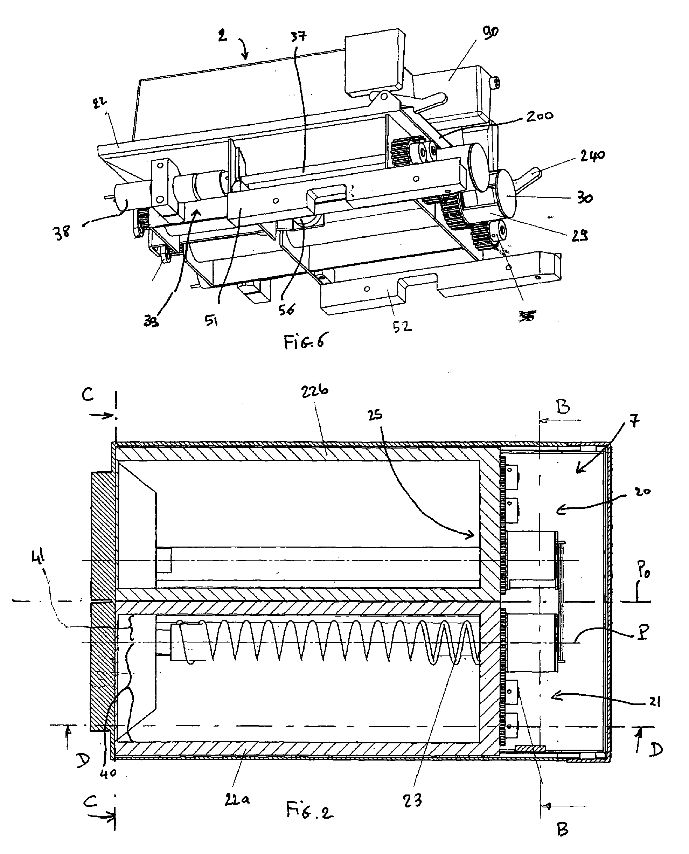

Les fig. 2 à 10 illustrent le mode préféré du dispositif de distribution comprenant deux systèmes de dosage 20, 21 insérés en parallèle dans le dispositif. Un dispositif de distribution pour avion ayant deux systèmes de dosage présente l'avantage de permettre la préparation de boissons chaudes sur la base de plusieurs combinaisons possibles à partir de deux types de poudre différentes, usuellement, à base de poudre soluble de café et/ou de lait.

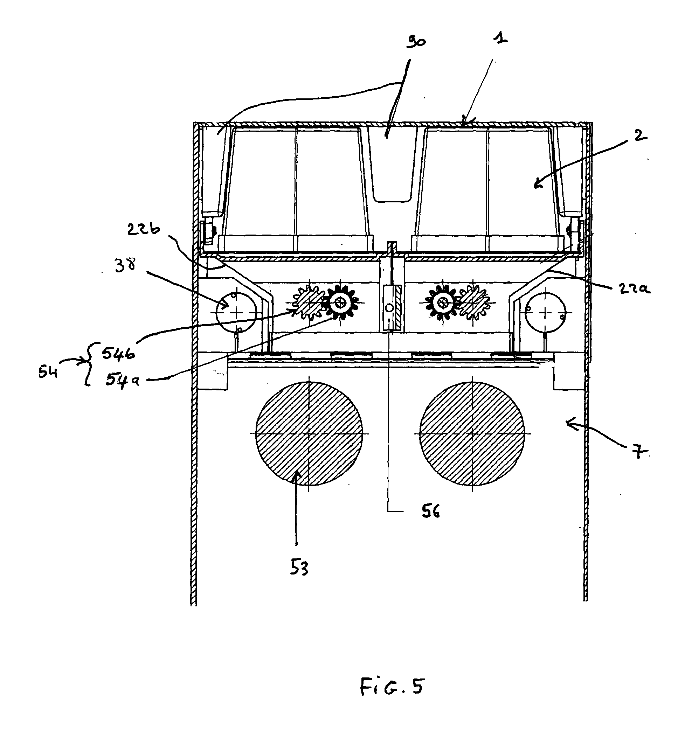

Pour faciliter la compréhension, la description du dispositif de dosage proprement-dit est faite pour un seul dispositif de dosage, étant entendu que les mêmes éléments et caractéristiques se retrouvent de la même manière sur l'autre dispositif. Chaque dispositif comprend donc une trémie 22 de forme horizontale sensiblement rectangulaire qui possède un moyen de dosage 23 orienté longitudinalement et situé dans le fond de la trémie. Le moyen de dosage 23 est, de préférence, une vis de dosage sans fin, connue de l'état de l'art qui est entraînée par un organe d'entraînement, de préférence, un moteur électrique 53 situé à l'arrière de la trémie (visible sur la fig. 5).

Comme le montre la fig. 3, la trémie est alimentée en poudre au moyen d'un élément de recharge en poudre 2 en forme de barquette possédant son ouverture en direction de la trémie et des bord 200 s'étendant sur le pourtour de son ouverture, tel qu'il est par ailleurs décrit plus en details dans la demande de brevet EP-A-1028068.

L'élément de recharge 2 est insérable selon une direction sensiblement horizontale après ouverture du panneau avant 12 entre des éléments de remplissage 90 formant un logement 91 du dispositif. La trémie possède des moyens de guidage 24 et de butée 241 destinés à coopérer avec les bords 200 de l'élément de recharge et permettant à l'élément de recharge 2 d'être amené en position renversée au-dessus de la trémie pour y verser en partie au moins son contenu et servir de container de stockage. Une telle configuration d'engagement dans le dispositif, a pour avantage de permettre, tout à la fois, un réapprovisionnement du dispositif par l'avant; c'est-à-dire, par ouverture du panneau avant 12 et, une optimisation de la place de stockage dans la machine avec un minimum de volume mort. La taille de la chambre 7 peut donc être optimisée au mieux en fonction de la capacité désirée et en fonction des standards d'encastrement à respecter. Les éléments de recharge sont destinés à être maintenus en place au dessus des trémies par des moyens d'arrêt 240, par exemple, un levier ayant une partie d'engagement destinée à coopérer avec le bord avant de l'élément de recharge, le levier étant monté sur l'une des parties de guidage 24 de la trémie.

La poudre stockée dans la trémie est transportée par le moyen de dosage ou vis doseuse 23 vers une zone d'alimentation 25 située à l'avant et dans le prolongement du moyen de dosage.

Selon un aspect de l'invention, comme le montre la fig. 2, chaque trémie a une forme longitudinale asymétrique par rapport à son plan P longitudinal médian. Plus particulièrement, la trémie comprend des parois convergentes pour diriger la masse de poudre le long du moyen de dosage selon la ligne d'alimentation. Les parois comprennent une paroi extérieure de faible pente 40 et une paroi intérieure 41 de plus forte pente. Les parois se rejoignent en dessous de la vis doseuse par une ligne de raccordement arrondie suivant le profil de la vis. Les deux trémies 22a, 22b sont disposées dans le dispositif de distribution de manière symétrique en rapport à l'axe médian Po du dispositif. Il résulte d'une telle configuration, que les zones d'alimentation des trémies sont rapprochées l'une de l'autre à proximité de l'axe médian Po. Le rapprochement des zones d'alimentation permet l'utilisation d'un seul bol de mélange 6 dimensionné de manière appropriée pour recevoir la poudre des deux dispositifs de dosage comme le montre la fig. 3. Il est important de noter que le rapprochement des zones d'alimentation autorise un dimensionnement inférieur du bol 6 dans toutes ses dimensions; car du fait de sa plus faible largeur due au rapprochement des zones, la pente nécessaire à un écoulement satisfaisant du mélange poudre-liquide dans le bol de mélange reste suffisante pour permettre de prévoir une relative faible hauteur du bol. Il faut aussi noter que le rapprochement des zones d'alimentation l'une de l'autre obtenue par asymétrie des trémies permet d'éviter l'utilisation de canaux convergents appelés "chutes" à la sortie des trémie qui sont orientés en direction du bol. Il s'agit d'un avantage dans la mesure où ces "chutes" ont tendance à s'encrasser facilement.

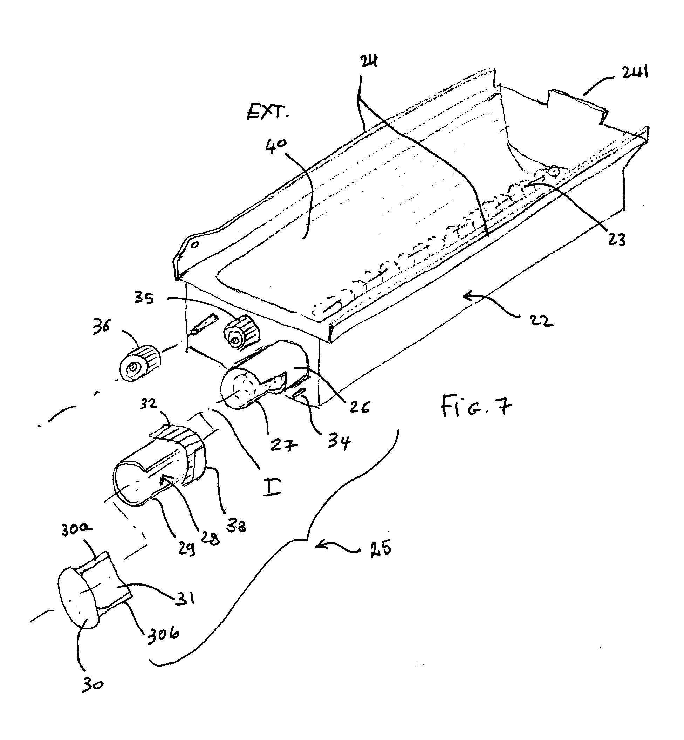

La zone d'alimentation 25 est formée d'une portion de base 26 faisant saillie en dehors de la trémie comme le montre plus particulièrement la fig. 7. La portion de base 26 a une forme tubulaire et est munie d'une ouverture 27 en forme de portion de quadrilatère arqué qui interrompt la portion tubulaire sur sa périphérie. L' ouverture est de préférence orientée vers le bas pour permettre la chute de la poudre en direction du bol de mélange 6 (Fig. 3). Toutefois, on pourrait envisager d'avoir l'ouverture tournée vers le haut avec chute de la poudre par effet de débordement. Selon une caractéristique de l'invention, un élément d'obturation 28 est arrangé autour de la portion de base 26 afin de permettre l'obturation sélective de l'ouverture 27.

L'élément d'obturation est, de préférence une portion de tube de plus grand diamètre et est disposé de manière coaxiale avec la portion de base. L'élément d'obturation 28 possède une lumière 29 s'étendant sur une portion arquée par rapport à la portion de tube. La lumière 29 a de préférence une forme sensiblement identique à celle de l'ouverture 27 ainsi que des dimensions sensiblement identiques ou légèrement supérieures favorisant le cisaillement pour éliminer, à la fin de chaque cycle, les barbes pouvant s'être formées le long des bords de l'ouverture. Un capot fixe 30 de fermeture de l'avant de la zone d'alimentation est prévu qui s'insère dans l'alésage de la portion de base 26 et qui est empêché en rotation par des lèvres 30a, 30b sensiblement saillantes délimitant les bords d'une ouverture 31 de sensiblement même configuration que l'ouverture 27 avec laquelle elle coïncide en fixation. L'assemblage capot/élément d'obturation est monté de manière coaxiale en glissement selon l'axe I et peut être facilement déboité permettant un nettoyage complet de la zone d'alimentation.
L'élément d'obturation 28 est commandé par des moyens d'engrenage 32, 35, 36 reliés à une tige de transmission 37, elle-même reliée à un organe de commande 38. Plus précisément, l'élément d'obturation 28 possède, à sa base, une portion cylindrique d'engrenage 32 interrompue par une zone arquée de guidage 33 pour le guidage d'un élément de butée 34 solidaire de l'avant de la trémie. La portion d'engrenage 32 est connectée à une paire d'engrenage 35, 36 axialement décalée par rapport à l'axe d'alimentation et solidaire de la trémie permettant de décaler la commande du mouvement de l'élément d'obturateur vers le côté extérieur de la trémie correspondant au côté de plus faible pente de la trémie et donc de plus grand dégagement pour le logement d'une tige de transmission 37. La tige de transmission 37 est ainsi située sous la paroi extérieure 40 de la trémie et est reliée à l'engrenage 36 situé dans le prolongement de la tige et décalé latéralement par rapport à un engrenage intermédiaire 35. Bien entendu, l'homme de l'art est en mesure de déterminer le nombre et les dimensions des moyens d'engrenage en fonction du décalage et du rapport de démultiplication nécessaires. L'organe de commande 38 est un moteur électrique, de préférence, un moteur miniature à courant continu du type de ceux produits par la société Maxon Motor Ag. du type 16 EBCLL 2W SL 1WE de tension 1 à 24 VDC.

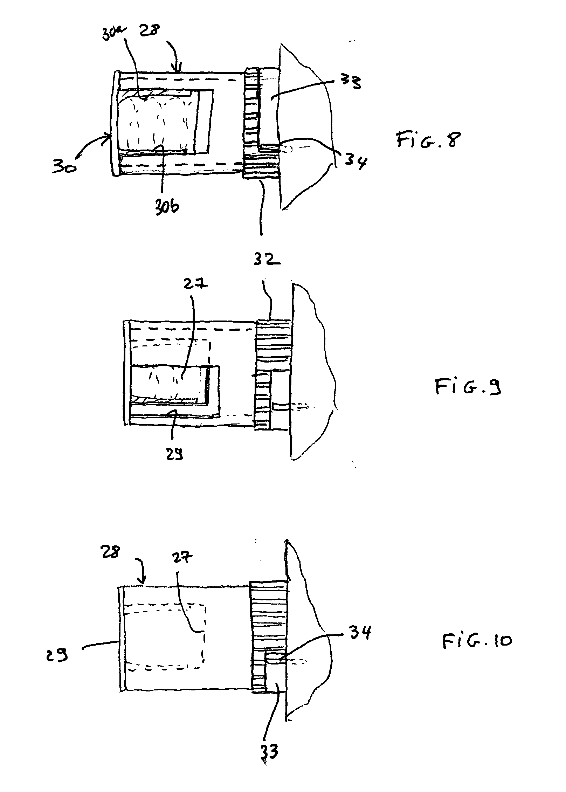

Le principe d'ouverture/fermeture de l'élément d'obturation du dispositif de dosage est illustré par les figures 8 à 10. Entre deux cycles de dosage, l'élément d'obturation 28 est en position de fermeture telle qu'à la fig. 10. Une partie de la portion de tube de l'élément d'obturation recouvre entièrement la lumière 27 de la portion de base sous-jacente. Dans un cycle normal de dosage, lorsque le consommateur sélectionne l'une des touches de sélection 120, le signal électrique est envoyé à un système de contrôle (non représenté) qui déclenche, dans un premier temps, l'ouverture de l'élément d'obturation 28 en activant l'organe de commande ou moteur 38 commandant l'ouverture de l'organe d'obturation. Une horloge du système de contrôle permet de régler le temps d'activation de l'organe de commande jusqu'à la fin de l'ouverture. La figure 9 montre une position intermédiaire d'ouverture de l'élément d'obturation. Le réglage d'ouverture est effectué de manière précise au moyen de l'élément de butée 34 qui coopère jusqu'en butée à une extrémité de la zone de guidage 33 définie comme la position d'ouverture de la fig. 8. Cette position est celle lorsque la lumière 29 de l'élément d'obturation coïncide sensiblement avec l'ouverture 27 de la portion de base. Le moteur est ensuite désactivé. Le système de contrôle active ensuite le moteur 53 du moyen de dosage pendant un temps nécessaire au moyen de l'horloge qui est fonction de la quantité à doser par le moyen de dosage. Dans la configuration de dosage, la zone d'alimentation est ouverte comme à la fig. 8. Lorsque le temps nécessaire au dosage est atteint, le système de contrôle désactive le moyen de dosage par coupure de son moteur 53. A ce moment, le système de contrôle active à nouveau le moteur 38, dont la polarité s'inverse, ce qui commande la rotation de l'élément d'obturation dans le sens opposé. L'élément de butée 34 règle la position de fermeture en servant de butée de fin de course contre l'extrémité opposée de la zone de guidage 33. En position fermée, le dispositif de dosage est prèt pour un nouveau cycle (Fig. 10).

Il est avantageux de prévoir que les dispositifs de dosage 20, 21 soient montés dans la chambre 7 de manière facilement amovible afin de favoriser la maintenance ainsi qu'un nettoyage régulier des éléments en contact avec les produits alimentaires. Ainsi, les deux trémies 22a, 22b sont montées ensembles sur un tiroir amovible 50 en forme de plateau permettant aux trémies de reposer en parallèle sur la surface principale du tiroir. Le tiroir est maintenu en place dans la chambre par des éléments de guidage 51, 52 connectées sur chaque paroi latérale 70, 71 de la chambre. Des moyens de connection amovibles du tiroir 50 par rapport à la chambre sont prévus pour maintenir le tiroir en place sans risque de mouvements accidentels possibles (non représentés).

Dans le contexte d'un dispositif monté sur tiroir amovible, les moteurs 38 sont préférablement rendus solidaires de la chambre 7 et comprennent des moyens de connection 39 qui les rendent enfichables aux moyens de transmission lors de la mise en place du tiroir comme le montre la fig. 4. Plus précisément, les moyens de connection enfichables forment un sous-ensemble d'accouplement comprenant une prise femelle 390 solidaire de la tige de transmission 37 dans laquelle coopère de manière amovible une prise mâle 391, solidaire du moteur 38. Le moteur est rendu, par ailleurs, solidaire des parois latérales de la chambre interne 7 par des moyens de connection du type vis, rivets ou équivalents 380.

De la même manière, les moteurs 53 qui commandent les moyens de dosage sont rendus solidaires de la chambre alors que le tiroir comprend les dispositifs de dosage. Comme le montre la fig. 5, la connection des moteurs 53 peut se faire par l'intermédiaire de moyens de connection tels qu'une paire d'engrenages 54 situés à l'arrière des trémies 22a, 22b. Un premier engrenage 54a est solidaire du moyen de dosage tandis qu'un second engrenage 54b est accouplé au moteur par un sous-ensemble de démultiplication (non-représenté). Lorsque le tiroir est poussé en position dans la chambre 7, l'engrenage 54a se met en place au côté de l'engrenage 54b.

La fig. 5 montre aussi la présence de moyens de contrôle du niveau de poudre comprenant des capteurs 56 du type capacitif disposés entre les deux trémies 22a, 22b et reliés au système de contrôle. Lorsque le niveau de poudre atteind un niveau insuffisant, un signal est envoyé par le capteur au système de contrôle qui active l'allumage d'une diode individuelle ou commune aux deux capteurs, sur le panneau avant du dispositif. L'opérateur est ainsi averti qu'au moins un des éléments de recharge est à remplacer. Le remplacement s'effectue simplement en ouvrant le panneau, puis en levant le levier 240, en retirant l'élément de recharge vide et en engageant une nouvelle recharge pleine dans un mouvement horizontal de glissement le long des moyens de guidage 24 jusqu'au moyen de butée 241, puis en refermant le panneau.

Pour une application à bord d'un avion de ligne, le dispositif de l'invention tel qu'illustré à la fig. 1 est susceptible de répondre à des standards dimensionnels et électriques très réglementés nécessitant l'approbation d'organismes de certification (CAA, JAA ou FAA). A titre d'exemple, le dispositif de l'invention est capable de répondre aux dimensions suivantes: Largeur de 6.3 inch (160 mm), hauteur de 12.0 inch (305 mm), profondeur de 15.28 inch (388 mm). L'alimentation électrique du dispositif pour une telle application est adaptée pour recevoir un courant alternatif de 115/200 Volts, trois phases, 400 Hz. Des connecteurs standards du type CA3106R16S-1PF80 sont installés permettant un enfichage du dispositif sur le système d'alimentation d'une armoire proprement équipée. Un circuit basse tension en courant continu (5, 12 et/ou 24 Volts) pour le fonctionnement des moteurs, est prévu dans le dispositif au moyen d'un transformateur spécifique permettant de transformer le courant principal d'entrée en courant basse tension dans le circuit. Un dispositif de chauffage d'eau est aussi prévu dans le dispositif du type à bouilloire avec corps de chauffe resistif ou du type thermobloc ou autres, pouvant fonctionner sur la base du courant principal d'entrée de façon à disposer d'une puissance de chauffage suffisante.

## Revendications

1. Dispositif de dosage en produit alimentaire à base de .poudre comprenant une trémie (22) pour le stockage de la poudre, un moyen de dosage (23) localisé dans la trémie (22) afin de transporter la poudre de la trémie vers une zone d'alimentation (25) comprenant une portion de base (26) munie d'une ouverture (27) permettant la chute d'une quantité dosée de poudre; **caractérisé en ce qu'**un élément d'obturation (28) est arrangé avec la portion de base (26) afin de permettre l'obturation de l'ouverture de la portion de base et **en ce qu'** il présente des moyens de commande de l'élément d'obturation capable de commander l'obturation de l'élément d'obturation (28) à partir de l'arrêt du moyen de dosage (23).

2. Dispositif de dosage selon la revendication 1, **caractérisé en ce que** la portion de base (26) forme une portion de tube munie d'une ouverture (27) permettant la chute d'une quantité déterminée de poudre et **en ce que** l'élément d'obturation (28) est disposé en relation coaxiale avec la portion de base (26) afin de permettre l'obturation de l'ouverture (27) par rotation de l'élément d'obturation (28) autour de la portion de base (26).

3. Dispositif de dosage selon la revendication 1 ou 2, **caractérisé en ce que** les moyens de commande comportent un organe d'entraînement (38) pour entraîner l'élément d'obturation, situé à l'arrière de la trémie et des moyens de transmission (32, 35, 36, 37) reliant l'organe d'entraînement (38) à l'élément d'obturation (28).

4. Dispositif de dosage selon la revendication 3, **caractérisé en ce que** le moyen de dosage (23) est décalé sur un côté de la trémie (22) par rapport au plan longitudinal médian (P) de la trémie et **en ce que** les moyens de transmission comportent des moyens d'engrenage (32, 35, 36) permettant de relier l'élément d'obturation (28) à une tige de transmission (37) connectée à l'organe d'entraînement (38).

5. Dispositif selon l'une quelconque des revendications précédentes, **caractérisé en ce qu'**il comporte un système de contrôle qui commande le cycle de dosage dans l'ordre suivant:
activation des moyens de commande (38) de l'élément d'obturation (28) à partir d'une position de fermeture (fig.10) de l'élément d'obturation vers une position d'ouverture et désactivation desdits moyens en position de d'ouverture (fig.8) de l'élément d'obturation (28),
activation du moyen de dosage (23) pour le début du dosage en poudre,
désactivation du moyen de dosage (23) pour la fin du dosage en poudre,
ré-activation des moyens de commande (38) de l'élément d'obturation (28) à partir de la position d'ouverture (fig. 8) de l'élément d'obturation vers une position de fermeture et désactivation desdits moyens en position de fermeture (fig. 10) de l'élément d'obturation.

6. Dispositif de distribution automatique de boissons sur demande de faible encombrement permettant la préparation de boissons comprenant:
au moins deux trémies (22a, 22b) pour le stockage de deux types de poudre, pouvant être sélectionnées soit individuellement, soit en mélange; les trémies étant positionnées de manière à présenter un côté adjacent; chaque trémie comprenant un moyen de dosage (23) permettant le transport de la poudre vers une zone d'alimentation (25);
un récipient de mélange commun (6) positionné de telle façon à pouvoir réceptionner la dose de poudre provenant de chacune des trémies;
**caractérisé en ce que** les deux trémies (22a, 22b) ont une forme asymétrique; le moyen de dosage (23) de chacune d'elles, étant positionné du côté adjacent aux deux trémies et par rapport au plan longitudinal médian (P) de chaque trémie, de façon à former une configuration rapprochée des zones d'alimentation l'une de l'autre, de façon à diminuer l'encombrement du récipient de mélange (6).

7. Dispositif de distribution automatique de boissons selon revendication 6, **caractérisé en ce qu'**il comprend à au dessus de chacune des trémies (22a, 22b), un logement (91) et des moyens de guidage (24) pour l'engagement d'un élément de recharge (2) en poudre en forme de barquette dans une configuration renversée pour alimenter la trémie correspondante en poudre.

8. Dispositif de distribution automatique de boissons selon revendication 6 ou 7, **caractérisé en ce que** les deux trémies (22a, 22b) sont montées en parallèle sur un tiroir (50) amovible par rapport dispositif.

9. Dispositif de distribution de boisson sur demande comprenant au moins une trémie (22, 22a, 22b), un logement (91) localisé au dessus de la trémie **caractérisé en ce que** la trémie (22, 22a, 22b) comprend des moyens de guidage (24) adaptés à recevoir un élément de recharge (2) en poudre le logement (91) ainsi que les moyens de guidage (24) étant arrangés de façon à permettre l'engagement dudit élément de recharge (2) selon une direction sensiblement horizontale.

10. Dispositif de distribution de boisson selon la revendication 9, **caractérisé en ce que** l'élément de recharge a la forme d'une barquette et est engagé en position renversée avec son ouverture en direction de la trémie.

11. Dispositif selon la revendication 9 ou 10, caractérisé l'accès au logement (91) est obtenu par ouverture d'un panneau avant (12) du dispositif.
